Europäisches Patentamt

European Patent Office

Office européen des brevets

(19)

(11) Veröffentlichungsnummer: **0 191 414 B1**

(12) **EUROPÄISCHE PATENTSCHRIFT**

(45) Veröffentlichungstag der Patentschrift: 27.03.91

(51) Int. Cl.⁵: **B01D 19/00**

(21) Anmeldenummer: 86101508.9

(22) Anmeldetag: 05.02.86

(54) **Verfahren zur Entgasung flüssigkristalliner Materalien.**

(30) Priorität: 14.02.85 DE 3505001

(43) Veröffentlichungstag der Anmeldung:
20.08.86 Patentblatt 86/34

(45) Bekanntmachung des Hinweises auf die
Patenterteilung:
27.03.91 Patentblatt 91/13

(84) Benannte Vertragsstaaten:
CH DE GB LI

(56) Entgegenhaltungen:
FR-A- 2 221 165
US-A- 2 306 265

CHEMICAL ABSTRACTS, Band 83, Nr. 74,
1975, Seite 483, Zusammenfassung 200260k,
Columbus, Ohio, US

(73) Patentinhaber: MERCK PATENT GESELL-
SCHAFT MIT BESCHRÄNKTER HAFTUNG
Frankfurter Strasse 250 Postfach 4119
W-6100 Darmstadt(DE)

(72) Erfinder: Bofinger, Klaus, Dr.
Eberstädter Strasse 7
W-6109 Mühltal(DE)
Erfinder: Kurmeier, Hans-Adolf, Dr.
Hinter der Schule 3a
W-6104 Seeheim-Jugenheim(DE)
Erfinder: Römer, Michael, Dr.
Niederwiesenring 129a
W-6054 Rodgau 2(DE)
Erfinder: Seubert, Jürgen, Dr.
Fr.Naumann-Strasse 6
W-6100 Darmstadt-Eberstadt(DE)

## Beschreibung

Die Erfindung betrifft ein Verfahren zur Entgasung flüssigkristalliner Materialien durch thermische Behandlung unter vermindertem Druck.

Flüssigkristalline Materialien finden vielfache technische Verwendung bei der Herstellung optoelektronischer Bauteile. In derartigen Anzeigesystemen befindet sich das flüssigkristalline Material in 5-30 μm dicken Schichten zwischen zwei transparenten Elektroden.

Flüssigkristalline Materialien, die vielfach nicht nur aus einer Komponente bestehen, sondern ein Gemisch von bis über 20 Einzelkomponenten darstellen können, sind viskose Flüssigkeiten, die beträchtliche Mengen Inertgas zu lösen vermögen. Diese gelösten Gasanteile können während oder nach dem Füllvorgang der Anzeigeelemente unter Zerstörung der optischen Homogenität wieder aus dem flüssigkristallinen Material austreten und zu Blasenbildung führen, wodurch das betreffende Anzeigeelement unbrauchbar wird. Besonders bei der Befüllung großflächiger Anzeigeelemente hat dies hohe Ausschußraten im Produktionsablauf zur Folge.

In der US-A-2 306 265 ist ein Verfahren beschrieben, bei dem viskose Flüssigkeiten an einem Dünnschichtverdampfer entgast werden. Nach der FR-A-2 221 165 ist weiterhin ein Verfahren beschrieben, wobei viskose Flüssigkeiten an einem Dünnschichtapparat unter Anwendung von Ultraschall entgast werden.

Das übliche Verfahren zur Entgasung von Flüssigkeiten durch Anlegen von Unterdruck gestaltet sich aufgrund der viskosen Beschaffenheit des zu entgasenden Materials als sehr langwierig und unvollständig.

Es besteht somit ein Bedürfnis nach einem Verfahren zur wirksamen und vollständigen Entgasung flüssigkristalliner Materialien.

Diese Aufgabe wird durch die vorliegende Erfindung gelöst.

Gegenstand der Erfindung ist daher ein Verfahren zur Entgasung flüssigkristalliner Materialien durch thermische Behandlung unter vermindertem Druck, dadurch gekennzeichnet, daß man die Entgasung unter zusätzlicher Beschallung mit Ultraschall in einem laufenden Rotationsverdampfer, dessen Verdampferkolben in ein beheiztes Ultraschallbad eintaucht, durchführt.

Eine die Entgasung von Flüssigkeiten begünstigende Viskositätserniedrigung läßt sich beispielsweise durch Temperaturerhöhung erzielen. Aufgrund der strukturell oft komplexen Zusammensetzung flüssigkristalliner Materialien zur Herstellung optoelektronischer Anzeigeelemente und damit stark differierenden Unterschieden in den physischen Eigenschaften der Einzelkomponenten, insbesondere ihren Dampfdrucken, mußte jedoch damit gerechnet werden, daß sich die quantitative Zusammensetzung dieser Materialien infolge unterschiedlicher Flüchtigkeiten als Folge einer derartigen Behandlung ändern würde.

Es war daher umso überraschender, daß sich flüssigkristalline Materialien und insbesondere flüssigkristalline Vielkomponentengemische dadurch wirksam und vollständig entgasen lassen, wenn man die Entgasung bei erhöhter Temperatur und vermindertem Druck unter zusätzlicher Beschallung mit Ultraschall in einem Rotationsverdampfer durchführt.

Im Rotationsverdampfer rotiert ein zum Teil im Heizbad getauchter Kolben um seine zur Horizontalen geneigte Achse. Durch die nur teilweise Füllung des Kolbens und dessen Rotation wird die darin befindliche Flüssigkeit am Umfang verteilt. Daraus resultieren eine den Entgasungsvorgang unterstützende geringere Schichtdicke und eine stärkere Durchmischung des Kolbeninhaltes.

Die Erzeugung des Ultraschallfeldes erfolgt bei dieser Verfahrensweise durch ein Ultraschallbad, wie es beispielsweise für Reinigungszwecke Anwendung findet. Das beheizbare Füllmedium des Bades bewirkt gleichzeitig eine Temperaturerhöhung des zu entgasenden Kolbeninhalts. Die angewandten Temperaturen und Drucke orientieren sich zweckmäßigerweise an der Zusammensetzung und der Viskosität des betreffenden flüssigkristallinen Materials. Im allgemeinen führt man das erfindungsgemäße Verfahren bei 10 bis 100 °C durch, vorzugsweise bei 20 bis 60 °C, insbesondere bei 20 bis 40 °C. Entsprechend angewandte Drucke liegen bei $9 . 10^4$ bis 1 Pa, vorzugsweise bei $5 . 10^4$ bis 10 Pa, insbesondere bei $5 . 10^4$ bis 100 Pa. Bei einer Dauer des Entgasungsvorganges von üblicherweise 15 bis 60 Minuten, meist jedoch nur 15 bis 30 Minuten wird ein weitgehend gasfreies, in seiner ursprünglichen Zusammensetzung unverändertes flüssigkristallines Material erhalten, das zur Befüllung von Anzeigeelementen, insbesondere solcher mit großen Flächen, geeignet ist. Das folgende Beispiel soll die Erfindung erläutern, ohne sie zu begrenzen.

Beispiel

1 kg eines Flüssigkristallmaterials, bestehend aus 20 Gewichtsteilen 4-(4-Ethylcyclohexyl)-cyanbenzol, 10 Gewichtsteilen 4-(4-Butylcyclohexyl)-cyanbenzol, 20 Gewichtsteilen 4-Butylcyclohexancarbonsäure-(4-(4-propylcyclohexyl)-phenyl)-ester, 15 Gewichtsteilen 4-Butylcyclohexancarbonsäure-(4-(4-pentylcyclohexyl)-phenyl)-ester, 13 Gewichtsteilen 4-Ethyl-4'-cyanbiphenyl und 22 Gewichtsteilen 4-Butyl-4'-cyanbiphenyl wird in einem 2 l-Kolben am Rotationsverdampfer bei 25 bis 30° und $2 \cdot 10^3$ Pa in einem Ultraschallbad 15 bis 30 Minuten gerührt.

Nach dieser Behandlung ist das Flüssigkristallmaterial zur Herstellung optoelektronischer Anzeigeelemente geeignet.

## Ansprüche

1. Verfahren zur Entgasung flüssigkristalliner Materialien durch thermische Behandlung unter vermindertem Druck, dadurch gekennzeichnet, daß man die Entgasung unter zusätzlicher Beschallung mit Ultraschall in einem laufenden Rotationsverdampfer, dessen Verdampferkolben in in ein beheiztes Ultraschallbad eintaucht, durchführt.

## Claims

1. Process for degassing liquid-crystalline materials by a thermal treatment under reduced pressure, characterized in that the degassing is carried out with additional ultrasonic treatment in a running rotary evaporator, the evaporation flask of which is immersed in a heated ultrasonic bath.

## Revendications

1. Procédé pour dégazification des materiaux à cristaux liquides par un traitement thermique sous pression dimunuée, caracterisé en ce que l'on exécute la dégazification sous traitement supplémentaire avec ultra-son dans un vaporisateur rotatif en immergeant le piston à vaporisation dans uns bain chauffé à ultra-son.